Europäisches Patentamt

European Patent Office

Office européen des brevets

(11) Veröffentlichungsnummer: **0 166 862**
**B1**

(12) **EUROPÄISCHE PATENTSCHRIFT**

(45) Veröffentlichungstag der Patentschrift:
**01.06.88**

(21) Anmeldenummer: **85102592.4**

(22) Anmeldetag: **07.03.85**

(51) Int. Cl.⁴: **H 04 B 7/26**

(54) **Einrichtung zur Übertragung von elektrischen Signalen, insbesondere im Langwellenbereich.**

(30) Priorität: **03.04.84 DE 3412508**

(43) Veröffentlichungstag der Anmeldung:
**08.01.86 Patentblatt 86/2**

(45) Bekanntmachung des Hinweises auf die Patenterteilung:
**01.06.88 Patentblatt 88/22**

(84) Benannte Vertragsstaaten:
**FR NL**

(56) Entgegenhaltungen:
**EP - A - 0 062 872**
**WO - A - 84/02435**
**DE - A - 2 745 295**
**DE - A - 2 752 724**
**DE - B - 2 818 675**

(73) Patentinhaber: **Industronic Industrie-Electronic GmbH & Co. KG, D-6980 Wertheim (DE)**

(72) Erfinder: **Mehrgardt, Sönke, Dr.-Ing., Häglestrasse 24, D-7801 March-Neuenshausen (DE)**
Erfinder: **Gelbke, Franz, Dipl.-Ing., Rötestrasse 3, D-6980 Wertheim-Lindelbach (DE)**
Erfinder: **Linowski, Heinz, Reichenberger Strasse 67, D-6980 Wertheim/Main (DE)**

(74) Vertreter: **Zinngrebe, Horst, Dr.rer.nat., Saalbaustrasse 11, D-6100 Darmstadt (DE)**

## Beschreibung

Die Erfindung betrifft eine Einrichtung zur Übertragung von elektrischen Signalen, insbesondere im Langwellenbereich, mit einer Signaleingangsstufe, wenigstens einem Bandpass mit nachgeschalteter Abtasteinrichtung, und mit einer Signalausgangsstufe.

Bekannt sind drahtlose Übertragungssysteme im Langwellenbereich mit 140 kHz. Die Übertragungen in diesem Frequenzbereich erfolgen entweder über festgeschaltete (Trägerfrequenz) oder über induktive Kopplungsstrecken mit nur geringer Reichweite. Derartige Übertragungseinrichtungen werden vor allem innerhalb industrieller Anlagen, beispielsweise zur Daten- und Sprachkommunikation mit schienengebundenen Fahrzeugen, eingesetzt.

Bekannte Einrichtungen dieser Art haben den Nachteil, dass man über einen Kanal entweder nur Sprache oder nur Daten übertragen kann. Sie arbeiten nach dem Prinzip Sender-Modulator-Übertragungsstrecke-Empfänger. Als Empfänger werden Geradeaus- oder Superheadempfänger benutzt. Die Daten werden etwa nach dem Prinzip der Frequenztastung übertragen.

Aus der DE-B2-2818675 ist eine Datenübertragungseinrichtung bekannt, die zwischen eine Datenendeinrichtung und eine Teilnehmerfernsprechschleife geschaltet ist. Sie dient dazu, von einer Vermittlungsstelle entfernte Datenendeinrichtungen, die mit einer Teilnehmerrate von 2400 Bits pro Sekunde arbeiten, an ein Datennetz über Teilnehmerfernsprechleitungen anschliessbar zu machen. Die Modulations- und Demodulationsfunktionen erfüllende Datenübertragungseinrichtung enthält dazu eine mikroprogrammierbare logische Einheit mit je einem pro Signalübertragungsrichtung vorgesehenen Analog/Digital bzw. Digital/Analogwandler sowie Anpassungseinrichtungen.

Demgegenüber soll mit der Erfindung eine Übertragungseinrichtung geschaffen werden, die sich durch einfache Umschaltung als Sender und als Empfänger für Daten und Sprache verwenden lässt, wobei Daten und Sprache ohne gesonderte Umstellung der Einrichtung übertragen werden sollen.

Erfindungsgemäss ist bei der eingangs genannten Einrichtung dazu vorgesehen, dass an die Abtasteinrichtung, welche aus den Signalen binäre Abtastwörter erzeugt, ein Microcomputer angeschlossen ist, welcher unter Steuerung eines oder mehrerer Programmspeicher den Informationsgehalt der Signale repräsentierende Binärwörter bildet und einem Digital-Analog-Wandler zuführt, der ausgangsseitig mit der Signalausgangsstufe verbunden ist. Mit dieser Einrichtung wird es möglich, dass der Microcomputer, der gegenüber der Frequenz der von der Einrichtung aufgenommenen Signale mit bedeutend höherer Frequenz arbeitet, gleichzeitig die Funktion eines Digitalfilters sowie Modulators beim Sendebetrieb oder Demodulators beim Empfangsbetrieb erfüllt. Die niederfrequenten Signale (Sprache) werden dabei nach dem Frequenzmodulationsverfahren und die Daten nach dem Frequenzumtastverfahren übertragen (Sendebetrieb).

Zweckmässige und besonders vorteilhafte Weiterbildungen der Erfindung sind in den Unteransprüchen erläutert.

Die Erfindung wird nachstehend anhand des in der beigefügten Zeichnung dargestellten Ausführungsbeispiels im einzelnen beschrieben. Es zeigen:

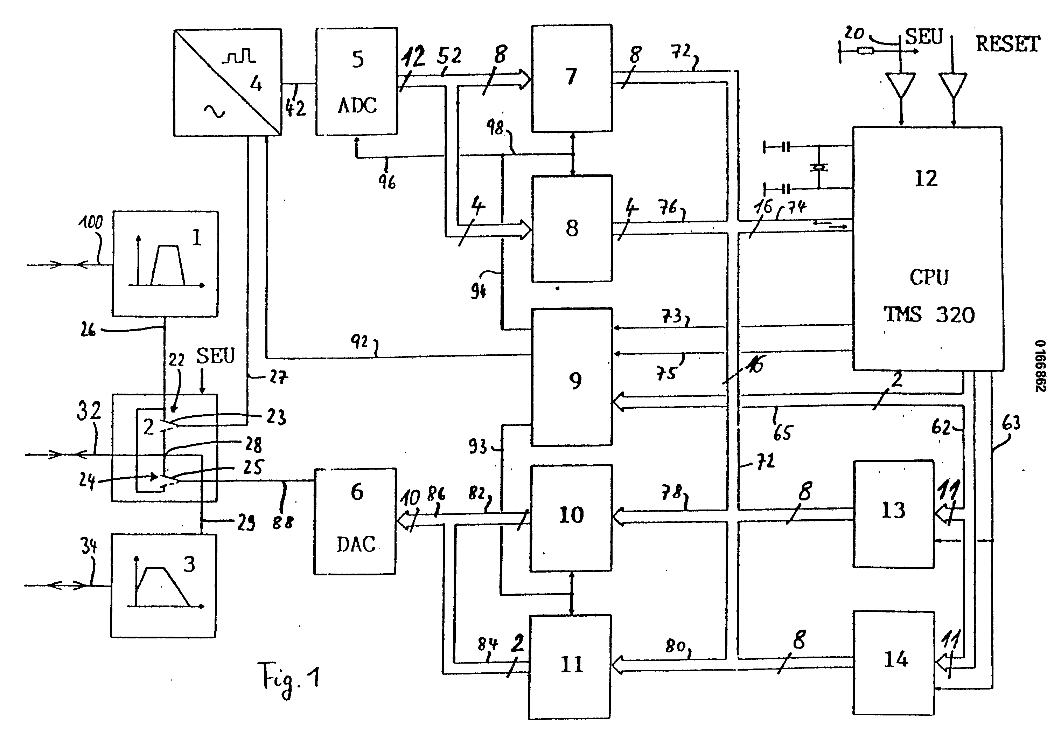

Fig. 1 ein schematisches Schaltungsdiagramm einer Übertragungseinrichtung, und

Fig. 2 bis 7 Zeitdiagramme einzelner Signalzüge, die auf verschiedenen Leitungen der Einrichtung auftreten.

Die Übertragungseinrichtung kann mittels eines nicht dargestellten Schalters entweder auf Senden oder auf Empfang umgestellt werden. Die von dem zugehörigen Schalter kommende Leitung ist mit 20 bezeichnet. Die Leitung 20 führt einerseits über SEU zu einem Umschalt-Eingang einer Umschaltstufe 2 und andererseits über geeignete Anpassglieder zu dem Microprozessor 12. In der Umschaltstufe sind zwei Schalter 22, 24 vorgesehen, die in Ruhestellung die Übertragungseinrichtung auf Empfang einstellen, wie dies die ausgezogen dargestellte Stellung der beweglichen Kontakte 23, 25 der Schalter 22, 24 zeigt. Ein Umschalten des externen, nicht dargestellten Schalters von Empfang auf Senden bewirkt, dass die beweglichen Kontakte 23, 25 die gestrichelt dargestellte Position einnehmen und die Übertragungseinrichtung auf Senden umstellen.

Nachfolgend wird die Übertragungseinrichtung zunächst als Empfänger beschrieben, wobei die beweglichen Kontakte 23, 25 die ausgezogene Position einnehmen.

Eine als Leitung dargestellte Eingangsstufe 100 nimmt etwa über eine induktive oder kapazitive Koppelstrecke mit Sprache oder Daten modulierte Hochfrequenzsignale auf, welche durch den Trägerbandpass 1 geführt werden. Der Trägerbandpass hat eine Durchlassbreite von etwa 5 kHz und dämpft die Harmonischen aus dem Empfangssignal heraus. Die Durchlasskurve des Trägerbandpasses 1 ist in Fig. 5 schmatisch dargestellt. Man sieht, dass die Durchlasskurve relativ breit und nicht sehr steil im Verhältnis zur Empfangsfrequenz ist.

Das dem Trägerbandpass 1 zugeführte Empfangssignal kann entweder eine mit Sprache frequenzmodulierte Hochfrequenzschwingung (Fig. 6) oder eine hochfrequente, im Zuge der übertragenen Daten umgetastete Schwingung sein.

Das hochfrequente, gefilterte Ausgangssignal aus dem Trägerbandpass 1 gelangt über Leitung 26 und den Schalter 22 in der Umschaltstufe 2 zur Leitung 27, die Eingangsleitung für eine Abtaststufe (Sample & Hold) 4 ist. Das hochfrequente, frequenzmodulierte Analogsignal, das der Abtaststufe 4 über Leitung 27 zugeführt wird, wird in der Abtaststufe 4 hochfrequent mit beispielsweise 300 kHz abgetastet, wie das der Kurvenzug aus Fig. 4 erläutert. Die auf der Ausgangsleitung 42 der Abtaststufe 4 auftretenden Impulszüge mit der Modulation entsprechenden Impulshöhen werden einem Analog-Digital-Wandler 5 zugeführt, der aus den Impulszügen binäre Abtastwörter bildet. Jedem aufgenommenen Impuls entspricht ein etwa 12 Bit breites Abtastwort, dessen Bit-Folge der jeweiligen Impulshöhe des auf Leitung 42 aufgenommenen Impulszuges entspricht.

Die Abtastwörter werden seriell über den Bus 52 und die Eingabetreiber 7 und 8 dem Mikroprozessor 12 zugeführt.

Der Mikroprozessor 12, beispielsweise TMS 320 von Texas Instruments, wird von einem quarzgesteuerten Taktgenerator mit Taktfrequenz von beispielsweise 20 MHz getrieben. Mit dem Mikroprozessor 12 ist ein erster Programmspeicher 13 sowie ein zweiter Programmspeicher 14 über einen Adressenbus 62 sowie über eine Steuerleitung 63 verbunden. Jeder der beiden Programmspeicher 13, 14 kann ein programmierbarer Lesespeicher von der Grösse 2k × 8 Bit sein. In dem Programmspeicher 13 und/oder dem Programmspeicher 14 sind die Betriebsprogramme für den Mikroprozessor 12 gespeichert. Der Mikroprozessor 12 ruft die Abtastwörter aus dem Analog-Digital-Wandler 5 über die Eingabetreiber 7, 8, deren Ausgangsbusse 72, 76 und einem 16 Bit breiten Datenbus 74 ab, steuert über die Steuerleitung 63 mit Adresswörtern über den Adressenbus 62 das jeweils erforderliche Programm aus den Programmspeichern 13 und 14 an, die die Programmwörter über den gemeinsamen Bus 72, 74 dem Mikroprozessor 12 zuleiten. Die in den Programmspeichern 13, 14 enthaltenen Programme und die Programmwörter selbst sind nicht Gegenstand der Erfindung. Sie ermöglichen jedoch, dass der Mikroprozessor anhand des sich aus den in dem Programmspeicher 13 und/oder 14 gespeicherten Programme ergebenden Algorithmus aus mehreren aufeinanderfolgenden Abtastwörtern ermitteln kann, ob die für ihn zum Empfang programmierte Frequenz in dem in den Abtastwörtern codiert enthaltenen Spektrum enthalten ist. Diejenigen Abtastwörter, die das durch die Programme zugelassene Freqenzspektrum enthalten, werden vom Mikroprozessor 12 unter Ausnutzung der aus den Programmspeichern 13, 14 abgerufenen Programme auf den Frequenzhub und die Frequenz-Änderungsgeschwindigkeit überprüft. Als Ergebnis der Überprüfung errechnet der Mikroprozessor jeweils 10 Bit breite Binärwörter, deren Bit-Muster die empfangene Sprachfrequenz bzw. den empfangenen Datenzug repräsentieren.

Durch das programmbestimmte Unterdrücken von Abtastwörtern, deren Bit-Muster ausserhalb des zulässigen Frequenzspektrums liegt, erfüllt der Mikroprozessor die Funktion eines Digitalfilters. Durch das ebenfalls programmbestimmte Ermitteln des in den zulässigen Abtastwörtern codiert enthaltenen Frequenzhubes und der Frequenz-Änderungsgeschwindigkeit führt der Mikroprozessor 12 die Funktion eines digitalen Demodulators mit bestmöglicher Demodulation aus.

Die vom Mikroprozessor 12 auf diese Weise gebildeten Binärwörter werden von diesem über den Datenbus 74, 72, 78, 80 zwei parallel geschalteten Ausgabetreibern 10, 11 zugeleitet, wo sie zwischengespeichert werden. Der Datenbus 72 mit seinen Verzweigungen ist 16 Bit breit.

Die Ausgangsbusse 84, 82 der Ausgabetreiber 10, 11 sind über einen gemeinsamen Bus 86 mit dem Eingang eines Digital-Analog-Wandlers 6 verbunden, der aus den Binärwörtern einen seriellen Impulszug gemäss Fig. 3 auf Ausgangsleitung 88 erzeugt, wobei die Impulshöhe gemäss dem Bit Muster der empfangenen Binärwörtern moduliert ist. Der auf Leitung 88 ausgegebene Impulszug kann entweder unmittelbar Daten darstellen, wenn die Impulshöhen des Impulszuges auf Leitung 88 nur zwei diskrete Werte annehmen. Hat der Impulszug auf Leitung 88 einen zeitlichen Verlauf wie in Fig. 3 ausschnittweise dargestellt, repräsentiert die Impulshöhenmodulation das niederfrequente Sprachsignal.

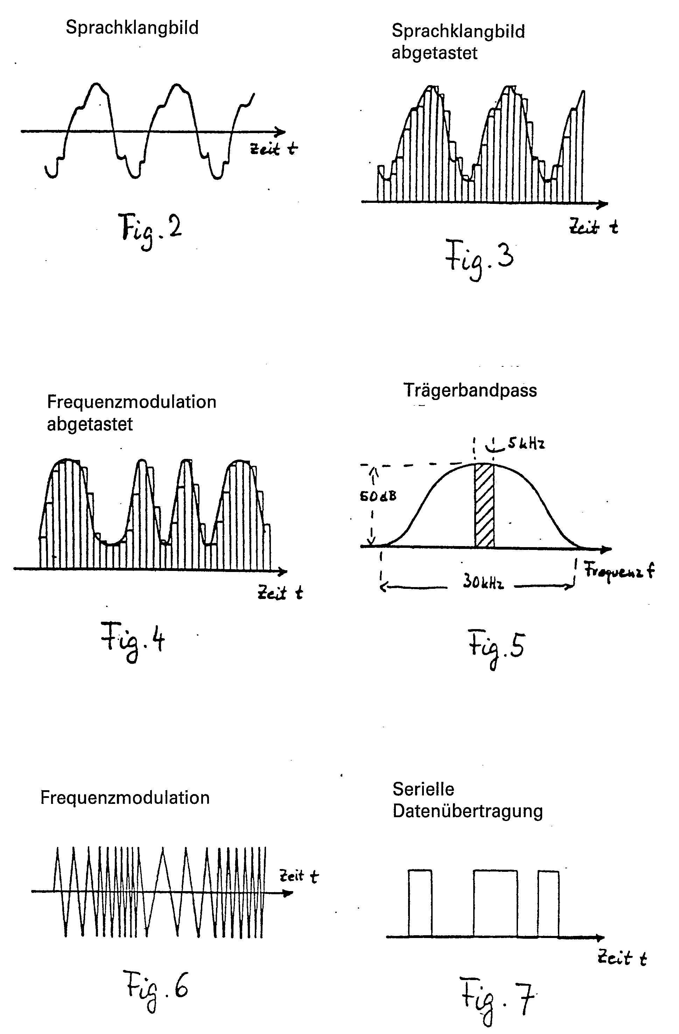

Der Impulszug gelangt von Leitung 88 über den beweglichen Kontakt 25 zum Verknüpfungspunkt 28. Von dem Verknüpfungspunkt 28 können die Daten unmittelbar über die als Leitung 32 dargestellte Ausgangsstufe abgegriffen werden. Vom Verknüpfungspunkt 28 führt eine Leitung 29 zu einem NF-Bandpass 3, in welchem aus dem impulshöhen-modulierten Impulszug durch Ausblenden das in Fig. 2 ausgezogen dargestellte niederfrequente Signal gebildet und über eine als Leitung 34 dargestellte Ausgangsstufe abgenommen werden kann.

Ist die Übertragungseinrichtung auf Senden geschaltet, liegt der bewegliche Kontakt 23 in der Umschaltstufe 2 wie gestrichelt dargestellt unmittelbar am Verknüpfungspunkt 28, und der bewegliche Kontakt 25 des Schalters 24 in der Umschaltstufe 2 ist mit der Leitung 26 verbunden.

Beim Senden von Daten gelangen diese über die jetzt als erste Eingangsstufe benutzte Leitung 32 direkt zum Verknüpfungspunkt 28. Wenn Sprachsignale übertragen werden sollen, gelangen diese über die jetzt als zweite Eingangsstufe dienende Leitung 34 zu dem NF-Bandpass 3, werden dort von Oberwellen befreit und gelangen so gefiltert über Leitung 29 zum Verknüpfungspunkt 28. Die Abtaststufe 4 nimmt also über Leitung 27 entweder ein Sprachsignal gemäss dem Kurvenzug aus Fig. 2 oder ein Datensignal gemäss Kurvenzug aus Fig. 7 auf. In der Abtasteinrichtung 4 wird das über Leitung 27 aufgenommene Eingangssignal wie oben beschrieben abgetastet und der sich ergebende Impulszug (Fig. 3) über Leitung 42 dem Analog-Digital-Wandler 5 zugeführt. Dieser bildet 12 Bit breite Abtastwörter, die seriell über den Bus 52 den Eingangstreibern 7, 8 zugeleitet werden, wo sie dem auf Senden umgestellten Mikroprozessor 12 über den Datenbus 72, 76, 74 zugeführt werden. Der Mikroprozessor 12 verarbeitet diese Abtastwörter gemäss den jetzt für den Sendebetrieb aus den Programmspeichern 13, 14 abgerufenen Programmwörtern. Der Mikroprozessor 12 ermittelt aus den Abtastwörtern neue Binärwörter, die über den Datenbus 74, 72, 78, 80 den Ausgabetreibern zugeführt werden und von dort über den Ausgangsbus 82, 84, 86 an den Digital-Analog-Wandler 6 als 10 Bit breite Binärwörter seriell weitergeleitet werden. Der Digital-Analog-Wandler 6 formt die empfangenen 10 Bit-Binärwörter in je einen impulshöhen modulierten Impulszug gemäss Fig. 4 um.

Da der bewegliche Kontakt 25 jetzt mit der Leitung 26 verbunden ist, gelangt der auf Leitung 88 vom Digital-Analog-Wandler 6 ausgegebene Impulszug auf den Trägerbandpass 1, der aus dem empfangenen Signal eine frequenzmodulierte hochfrequente Schwingung bildet und über die jetzt als Ausgangsstufe dienende Leitung 100 auf die nicht dargestellte Übertragungsstrecke gibt.

Zur zeitgerechten Steuerung des Betriebs der Abtaststufe 4, des Analog-Digital-Wandlers 5, sowie der Eingabetreiber 7, 8 und der Ausgabetreiber 10, 11, dient ein Demultiplexer 9, der über Steuerleitungen 73, 75 sowie dem Adressbus 65 vom Mikroprozessor gemäss dem jeweils von diesem verarbeiteten Programm gesteuert wird. Ausgangsseitig führt eine Steuerleitung 92 vom Demultiplexer 9 zur Abtaststufe 4, eine Steuerleitung 94, 96 zum Analog-Digital-Wandler 5, eine Steuerleitung 94, 98 zu den beiden Eingabetreibern 7, 8 und eine Steuerleitung 93 zu den beiden Ausgabetreibern 10, 11. Die Taktfrequenzen für die Abtaststufe 4, für den Analog-Digital-Wandler 5, sowie für die Eingabetreiber 7, 8 und die Ausgabetreiber 10, 11 sind nicht fest vorgegeben, sondern werden von dem im Mikroprozessor 12 jeweils verarbeiteten Programm aus den Programmspeichern 13, 14 bestimmt.

Die Erfindung ist auf Einzelheiten der dargestellten Einrichtung nicht beschränkt. So liegt es beispielsweise im Rahmen der Erfindung, die Abtaststufe 4 und den Analog-Digital-Wandler 5 zu einer einzigen Abtasteinrichtung schaltungsmässig zusammenzufassen.

**Patentansprüche**

1. Einrichtung zur Übertragung von elektrischen Signalen, insbesondere im Langwellenbereich, mit einer Signaleingangsstufe (100), wenigstens einem Bandpass (1) mit nachgeschalteter Abtasteinrichtung (4, 5), und mit einer Signalausgangsstufe (32, 34), dadurch gekennzeichnet, dass an die Abtasteinrichtung (4, 5), welche aus den Signalen binäre Abtastwörter erzeugt, ein Mikroprozessor (12) angeschlossen ist, welcher unter Steuerung wenigstens eines Programmspeichers (13, 14) aus den Abtastwörtern den Informationsgehalt der Signale repräsentierende Binärwörter bildet und einem Digital-Analog-Wandler (6) zuführt, der ausgangsseitig mit der Signalausgangsstufe (32, 34) verbunden ist, wobei im Sendebetrieb die Eingangsstufe (100) und die Ausgangsstufe (32, 34) gegenüber dem Empfangsbetrieb vertauscht sind.

2. Einrichtung nach Anspruch 1, dadurch gekennzeichnet, dass die Abtasteinrichtung aus einer Abtaststufe (Sample & Hold 4) und einem nachgeschalteten Analog-Digital-Wandler (5) besteht.

3. Einrichtung nach Anspruch 1 oder 2, dadurch gekennzeichnet, dass an die Ausgangsleitung (88) des Digital-Analog-Wandlers (6) im Sendebetrieb eine Trägerbandpassstufe (1) und im Empfangsbetrieb ein Niederfrequenz-Bandpass (3) angeschlossen ist.

4. Einrichtung nach einem der vorstehenden Ansprüche, dadurch gekennzeichnet, dass eine Umschaltstufe (2) vorgesehen ist, welche über eine Ausgangsleitung (27) mit der Abtasteinrichtung (4, 5) und über eine Eingangsleitung (88) mit dem Ausgang des Digital-Analog-Wandlers (6) verbunden ist und an die Signaleingangsstufe sowie die Signalausgangsstufe derart angeschlossen ist, dass durch Umschalten zweier Schalter (22, 24) in der Umschaltstufe (2) die Einrichtung im Sendebetrieb oder Empfangsbetrieb arbeitet.

5. Einrichtung nach Anspruch 4, dadurch gekennzeichnet, dass im Empfangsbetrieb die mit Sprachsignalen oder Daten frequenzmodulierten, hochfrequenten Eingangssignale aus der Eingangsstufe (100) über die Trägerbandpassstufe (1) sowie einen der Schalter (22) der Umschaltstufe (2) der Abtasteinrichtung (4, 5) zugeführt werden und aus der Ausgangsleitung (88) des Digital-Analog-Wandlers (6) über den zweiten Schalter (24) der Umschaltstufe (2) einerseits Daten über eine erste Ausgangsstufe (32) und/oder andererseits tonfrequente Signale aus der Niederfrequenz-Bandpassstufe (3) über eine zweite Ausgangsstufe (34) ausgegeben werden.

6. Einrichtung nach einem der Ansprüche 1 bis 4, dadurch gekennzeichnet, dass im Sendebetrieb die Daten über eine erste Eingangsstufe (32) direkt und die tonfrequenten Signale über eine zweite Eingangsstufe (34) über die Niederfrequenz-Bandpassstufe (3) der Abtasteinrichtung (4, 5) zugeführt werden, und frequenzmodulierte, hochfrequente Signale über die Ausgangsleitung 88 des Digital-Analog-Wandlers (6) über die Trägerbandpassstufe (1) einer Ausgangsstufe (100) zugeführt werden.

7. Einrichtung nach einem der vorstehenden Ansprüche, dadurch gekennzeichnet, dass die Abtasteinrichtung (4, 5) die binären Abtastwörter wortseriell und bitparallel durch wenigstens einen Eingangstreiber (7, 8) dem Mikroprozessor (12) zugeleitet werden.

8. Einrichtung nach einem der vorstehenden Ansprüche, dadurch gekennzeichnet, dass die vom Mikroprozessor (12) erzeugten Binärwörter bitparallel und wortseriell über wenigstens einen Ausgabetreiber (10, 11) dem Digital-Analog-Wandler (6) zugeführt werden.

9. Einrichtung nach einem der vorstehenden Ansprüche, dadurch gekennzeichnet, dass der Mikroprozessor (12) aus einem Grundtakt eines Taktgenerators die Taktfrequenz für die Abtasteinrichtung (4, 5) und den Digital-Analog-Wandler (6) bildet.

10. Einrichtung nach einem der vorstehenden Ansprüche, dadurch gekennzeichnet, dass die Programmspeicher programmierbare Lesespeicher sind.

## Claims

1. Apparatus for transmitting electric signals particularly of the long-ware range, the apparatus having a signal input stage (100) and at least one band filter (1) after which a scanning apparatus (4, 5) is switched and having a signal output stage (32, 34), characterized in that a microprocessor (12) is coupled to the scanning apparatus (4, 5) generating binary scanning words from the signals, the microprocessor forming binary words representing the information contents of the signals from the scanning words under control of at least one program memory (13, 14), and applying said binary words to a digital analogue converter (6), the output of which is connected to the signal output stage (32, 34) such that during transmission mode the input stage (100) and the output stage (32, 34) are exchanged which respect to the receiving mode.

2. Apparatus according to claim 1, characterized in that the scanning means comprises a scanning stage (sample + hold 4) and an analogue digital converter (5) switched thereafter.

3. Apparatus according to claim 1 or 2, characterized in that during transmission mode a carrier band pass stage (1) is coupled to the output line (88) of the digital analogue converter (6) and that during receiving mode a low-frequency band filter (3) is coupled to the output line.

4. Apparatus according to anyone of the preceding claims characterized in that a switching stage (2) is provided which is connected to the scanning means (4, 5) through an output line (27) and to the output of the digital analogue converter (6) through an input line (88) and is coupled to the signal input stage and the signal output stage such that the apparatus runs in transmission mode or in receiving mode when turning two switches (22, 24) within the switching stage (2).

5. Apparatus according to claim 4, characterized in that during receiving mode the input signals from the input stage (100), which are high-frequency modulated voice signals or data, are applied to the scanning means (4, 5) through the carrier band pass stage (1) and one of the switches (22) of the switching stage (2), and that, from the output line (88) of the digital analogue converter (6) through a second switch (24) of the switching stage (2), data on one hand are delivered through a first output stage (32) and/or voice frequent signals on the other hand are delivered from the low-frequency band pass stage (3) through a second output stage (34).

6. Apparatus according to anyone of claims 1 through 4, characterized in that during transmission mode the data are applied to the scanning means (4, 5) directly through a first input stage (32) and the voice frequent signals are applied to the scanning means (4, 5) through a second input stage (34) through the low-frequency band pass stage (3), and the high-frequency modulated signals are applied to an output stage (100) trough the output line (88) of the digital analogue converter (6) through the carrier band pass stage (1).

7. Apparatus according to anyone of the preceding claims, characterized in that the scanning means (4, 5) feeds the binary scanning words word-serially and bit-parallel to the microprocessor (12) through at least one input driver (7, 8).

8. Apparatus according to anyone of the preceding claims, characterized in that the binary words generated by the microprocessor (12) are fed to the digital analogue converter (6) bit-parallel and word-serially through at least one output driver (10, 11).

9. Apparatus according to anyone of the preceding claims, characterized in that the microprocessor (12) forms the clock frequency for the scanning means (4, 5) and the digital analogue converter (6) out of the base clock of a clock generator.

10. Apparatus according to anyone of the preceding claims, characterized in that the program memories are programmable read-only memories.

## Revendications

1. Dispositif de transmission de signaux électriques, en particulier dans la gamme grandes ondes, avec un étage d'entrée de signaux (100), au moins un passe bande (1) suivi d'un dispositif d'échantillonnage (4, 5), et un étage de sortie de signaux (32, 34), caractérisé en ce qu'au dispositif d'échantillonnage (4, 5), qui produit des mots d'échantillon binaires à partir des signaux, est connecté un microprocesseur (12) qui, en commandant au moins une mémoire de programmes (13, 14), forme, à partir des mots d'échantillon, des mots binaires représentant le contenu d'informations des signaux et les transmet à un convertisseur numérique-analogique (6) qui est connecté côté sortie à l'étage de sortie de signaux (32, 34), l'étage d'entrée (100) et l'étage de sortie (32, 34) étant, en mode d'émission, permutés par rapport au mode de réception.

2. Dispositif conforme à la revendication 1, caractérisé en ce que le dispositif d'échantillonnage est constitué d'un étage d'échantillonnage (échantillonneur & bloqueur 4) suivi d'un convertisseur analogique-numérique (5).

3. Dispositif conforme à la revendication 1 ou 2, caractérisé en ce qu'à la ligne de sortie (88) du convertisseur numérique-analogique (6) est connecté, en mode d'émission, un étage passe bande de porteuse (1) et, en mode de réception, un passe bande basse fréquence (3).

4. Dispositif conforme à l'une des revendications précédentes, caractérisé en ce qu'il est prévu un étage de commutation (2) qui, par l'intermédiaire d'une ligne de sortie (27), est connecté au dispositif d'échantillonnage (4, 5) et, par l'intermédiaire d'une ligne d'entrée (88), à la sortie du convertisseur numérique-analogique (6) et est relié à l'étage d'entrée de signaux ainsi qu'à l'étage de sortie de signaux, de manière qu'un commutant deux commutateurs (22, 24) dans l'étage de commutation (2), le dispositif fonctionne en mode d'émission ou en mode de réception.

5. Dispositif conforme à la revendication 4, caractérisé en ce qu'un mode de réception, les signaux d'entrée haute fréquence, modulés en fréquence par des signaux vocaux ou des données, sont transmis de l'étage d'entrée (100), par l'intermédiaire de l'étage passe bande de porteuse (1) ainsi que de l'un des commutateurs (22) de l'étage de commutation (2), au dispositif d'échantillonnage (4, 5) et, de la ligne de sortie (88) du convertisseur numérique-analogique (6), par l'intermédiaire du second commutateur (24) de l'étage de commutation (2), sont délivrés, d'une part, des données par l'intermédiaire d'un premier étage de sortie (32) et/ou, d'autre part, des signaux à fréquence audio provenant de l'étage passe bande basse fréquence (3) par l'intermédiaire d'un second étage de sortie (34).

6. Dispositif conforme à l'une des revendications 1 à 4, caractérisé en ce qu'en mode d'émission, les données sont transmises directement au dispositif d'échantillonnage (4, 5) par l'intermédiaire d'un premier étage d'entrée (32) et les signaux à fréquence audio sont transmis par l'intermédiaire d'un second étage d'entrée (34) par l'intermédiaire de l'étage passe bande basse fréquence (3), et des signaux haute fréquence à modulation de fréquence sont transmis à un étage de sortie (100) par l'intermédiaire de la ligne de sortie (88) du convertisseur numérique-analogique (6) par l'intermédiaire de l'étage passe bande de porteuse (1).

7. Dispositif conforme à l'une des revendications précédentes, caractérisé en ce que du dispositif d'échantillonnage (4, 5), les mots d'échantillon binaires sont transmis au microprocesseur (12) en série par mot et en parallèle par bit par l'intermédiaire d'au moins un étage de transfert d'entrée (7, 8).

8. Dispositif conforme à l'une des revendications précédentes, caractérisé en ce que les mots binaires produits par le microprocesseur (12) sont transmis en série par mot et en parallèle par bit au convertisseur numérique-analogique (6) par l'intermédiaire d'au moins un étage de transfert de sortie (10, 11).

9. Dispositif conforme à l'une des revendications précédentes, caractérisé en ce que le microprocesseur (12) forme la fréquence d'horloge pour le dispositif d'échantillonnage (4, 5) et pour le convertisseur numérique-analogique (6) à partir d'une fréquence de base d'un générateur d'horloge.

10. Dispositif conforme à l'une des revendications précédentes, caractérisé en ce que les mémoires de programmes sont des mémoires mortes programmables.

Fig. 1

Sprachklangbild

Fig.2

Sprachklangbild
abgetastet

Fig.3

Frequenzmodulation
abgetastet

Fig.4

Trägerbandpass

Fig.5

Frequenzmodulation

Fig.6

Serielle
Datenübertragung

Fig.7

9